# FASCICULE DE BREVET EUROPEEN

(11) **EP 0 370 869 B1**
(45) Date de publication et mention de la délivrance du brevet: **26.01.1994**
(21) Numéro de dépôt: 89403152.5
(22) Date de dépôt: 17.11.1989
(51) Int. Cl.: C13D 1/08, C13D 1/10

(54) **Perfectionnements à l'extraction par diffusion du sucre de betteraves**
Extraktion durch Diffusion des Rübenzuckers
Diffusion of beet sugar

(30) Priorité: 18.11.1988 FR 8815011; 04.01.1989 FR 8900043
(43) Date de publication de la demande: 30.05.1990
(73) Titulaire: F C B, 93107 Montreuil Cédex (FR)
(72) Inventeur: Dambrine, Francis, F-78430 Louveciennes (FR); de Cremoux, Jacques, F-59260 Lille-Hellemmes (FR)
(74) Mandataire: Fontanié, Etienne

(56) Documents cités:
- EP-A- 0 092 466
- FR-A- 2 268 865
- GB-A- 1 048 326
- GB-A- 2 086 757

## Description

La présente invention a trait à l'extraction du sucre des betteraves par diffusion qui est une opération consistant à soumettre les cossettes de betteraves à un lessivage à contre-courant au moyen d'eau chaude pour produire, d'une part, un jus sucré qui est épuré avant d'être concentré par évaporation puis soumis à la cristallisation et, d'autre part, des pulpes qui sont pressées, pour en extraire des eaux qui sont recyclées en diffusion, puis séchées.

Pour diminuer la teneur en matières pectiques du jus et améliorer le pressage des pulpes, il est connu de traiter les cossettes, avant ou pendant la diffusion, au moyen de sels de calcium. On a notamment proposé d'utiliser dans ce but du saccharate de calcium obtenu par addition de chaux vive à un jus sucré préalablement refroidi à la température convenable (voir, par exemple, EP-A-0 092 466).

Suivant le procédé connu, les cossettes sont mises en contact, soit par mélange, soit par percolation, avec du jus de diffusion préalablement refroidi et additionné de chaux. Une partie du jus est retenu par les cossettes, mais la majeure partie est envoyée à l'atelier d'épuration et seule une partie des ions calcium est fixée par les cossettes. Il en résulte une consommation importante de chaux et de frigories.

Le but de la présente invention est d'apporter à ce procédé des perfectionnements permettant une mise en oeuvre plus économique.

Le procédé de traitement préalable des cossettes de betteraves objet de l'invention est caractérisé en ce qu'on fait circuler en circuit fermé le jus additionné de chaux utilisé pour traiter les cossettes, qu'on introduit dans ce circuit un débit d'eau ou de jus sucré totalement ou partiellement épuré correspondant au débit de jus retenu par les cossettes et un débit de chaux correspondant aux ions calcium fixés sur les cossettes, et qu'on maintient la température du jus dans ledit circuit à une valeur convenable pour le traitement des cossettes. On pourra utiliser de la chaux vive ou du lait de chaux.

Le traitement des cossettes se fera avantageusement en plusieurs étapes et à chaque étape les cossettes seront traitées au moyen de jus circulant en circuit fermé avec addition des quantités nécessaires de jus ou d'eau et de chaux, la teneur en chaux du jus de traitement augmentant de la première à la dernière étape.

Suivant une forme de réalisation préférée de l'invention, le jus épuré ou l'eau et la chaux ne sont ajoutés que dans l'une des étapes du traitement, le débit et la teneur en chaux du jus circulant en circuit fermé dans les autres étapes étant ajustés par addition de jus prélevé sur le circuit de ladite étape où se font les ajouts.

Préalablement audit traitement, les cossettes pourront être lavées avec du jus pour en extraire le jus cellulaire; le jus ayant servi au lavage sera envoyé, avec le jus de diffusion, à l'atelier d'épuration.

Au contact des cossettes, le jus qui circule en circuit fermé se charge d'impuretés qui peuvent gêner la réaction de calcification. Une partie de ces impuretés est éliminée avec le jus retenu par les cossettes, mais cette purge n'est pas toujours suffisante pour maintenir le jus à la pureté voulue, notamment lorsqu'on soumet les cossettes à un lavage préalable.

Pour remédier à cet inconvénient, il est proposé, conformément à une autre caractéristique de l'invention, de prélever sur l'un des circuits ou sur chacun d'eux un débit de jus constituant une purge permettant de maintenir la pureté du jus circulant dans le circuit à la valeur voulue, le débit d'eau ou de jus totalement ou partiellement épuré introduit dans ledit circuit correspondant au débit de jus retenu par les cossettes augmenté dudit débit de purge.

Pour la mise en oeuvre du procédé de l'invention, on pourra utiliser un transporteur à tapis sans fin perméable sur lequel les cossettes seront chargées en une couche régulière et équipé de rampes d'arrosage, placées au-dessus du tapis, et de collecteurs, placés au-dessous. Une telle installation, connue en soi du document FR-A- 2 268 865, est caractérisée en ce que les rampes d'arrosage et les collecteurs sont reliés entre eux, au moyen de tuyaux et de pompes, de façon à former plusieurs circuits fermés échelonnés le long du transporteur, chacun de ces circuits étant équipé de moyens de réglage du débit et de la teneur en chaux (alcalinité) du jus, et au moins l'un des circuits comportant un échangeur thermique permettant de maintenir la température du jus à la valeur voulue.

L'alcalinité du jus dans chaque circuit peut être réglée par addition de débits dosés de chaux; en variante, ce mode de réglage peut être adopté sur un seul des circuits, de préférence celui situé le plus en aval, et l'alcalinité du jus dans les autres circuits peut être réglée par addition de jus prélevé sur le premier nommé.

Le volume du jus circulant dans l'un des circuits fermés pourra être réglé par addition d'eau ou de jus totalement ou partiellement épuré et le volume du jus circulant dans chacun des autres circuits sera réglé par addition de jus prélevé sur ledit circuit où se fait l'addition d'eau ou de jus.

On pourra aussi utiliser pour la mise en oeuvre de l'invention, un malaxeur horizontal équipé de moyens de transport assurant le déplacement des cossettes d'une extrémité à l'autre de l'appareil et muni de plusieurs entrées et sorties du jus. Une telle installation, connue en soi du document FR-A-1487927, est caractérisée en ce que les entrées et sorties sont reliées entre elles de façon à former plusieurs circuits fermés échelonnés le long du malaxeur, chacun de ces circuits étant équipé de moyens de réglage du débit et de la teneur en chaux du jus et au moins l'un des circuits comportant un échangeur thermique permettant de maintenir la température du jus à la valeur voulue.

D'autres caractéristiques de l'invention apparaîtront à la lecture de la description qui suit et se réfère aux dessins l'accompagnant qui sont les schémas de deux installations pour la mise en oeuvre de l'invention donnés à titre d'exemples non limitatif.

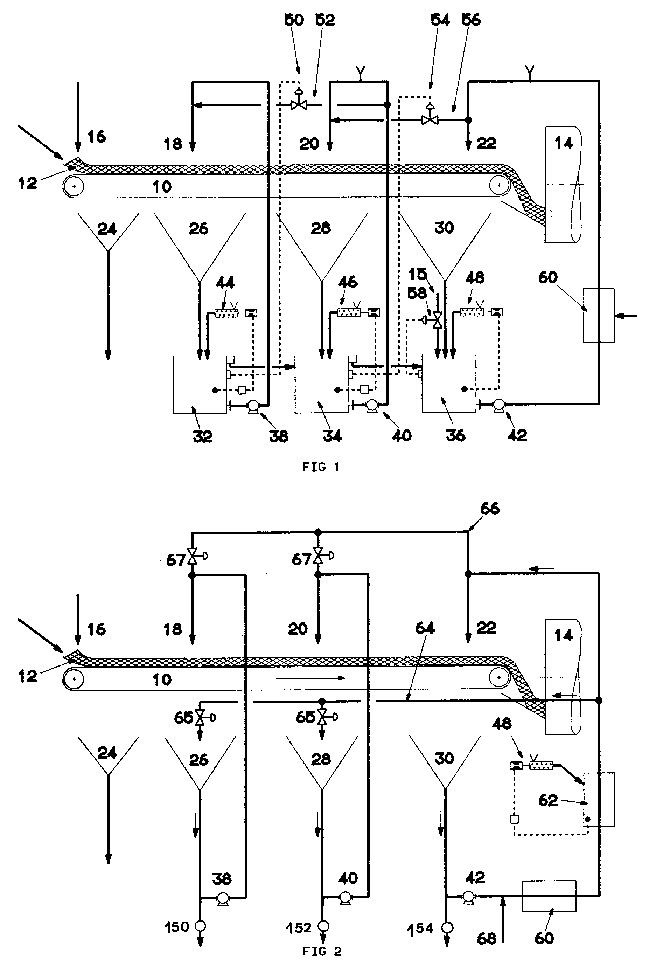

L'installation représentée schématiquement sur la figure 1 comporte un transporteur-échangeur à tapis sans fin perméable 10 placé en tête du diffuseur 14. Les cossettes 12 sont chargées sur le tapis, à une des extrémités du transporteur pour former une couche régulière, et sont déversées, à l'autre extrémité du transporteur, dans un échaudoir précédant le diffuseur 14.

Le transporteur-échangeur est équipé de rampes 16, 18, 20 et 22 disposées au-dessus du brin supérieur du tapis et espacées le long du transporteur et de collecteurs 24, 26, 28 et 30 placés sous le tapis de façon à recueillir le jus déversé par les rampes 16, 18, 20 et 22, respectivement, après qu'il ait traversé la couche de cossettes et le tapis.

Le jus recueilli dans les collecteurs 26, 28 et 30 est envoyé dans des bacs de mélange 32, 34 et 36 respectivement. Des pompes 38, 40 et 42 soutirent du jus sur ces bacs pour alimenter les rampes 18, 20 et 22, respectivement.

Des distributeurs 44, 46 et 48 permettent d'introduire des quantités dosées de chaux dans les bacs 32, 34 et 36, respectivement.

En régime de marche normale, la rampe 16 est alimentée avec du jus préalablement refroidi à une température d'environ 15°C. Une partie de ce jus est absorbée par la couche des cossettes; l'autre partie qui traverse cette couche est recueillie dans le collecteur 24 et envoyée à l'atelier d'épuration. Les cossettes sont ensuite arrosées par le jus déversé par la rampe 18, qui traverse la couche de cossettes, est recueilli dans le collecteur 26 puis envoyé dans le bac 32 et recyclé par la pompe 38.

On réalise donc ainsi une circulation en circuit fermé du jus. Dans ce circuit, le débit est réglé à la valeur voulue au moyen de la pompe 38 et l'alcalinité du jus est réglée au moyen du distributeur-doseur 44, à partir des informations d'un pHmètre placé dans le bac. Par ailleurs, un trop-plein permet d'envoyer le jus en excédent du bac 32 vers le bac 34 et un régulateur de niveau agit sur une vanne 50 placée sur une tuyauterie 52 reliant les tuyauteries d'alimentation des rampes 18 et 20 pour maintenir une hauteur minimale du jus dans le bac. Ces moyens permettent de tenir compte des variations possibles du volume du jus retenu par la couche des cossettes.

Les pompes 40 et 42 réalisent de même une circulation en circuit fermé du jus déversé par les rampes 20 et 22 et recueilli par les collecteurs 28 et 30, respectivement. On assure ainsi un traitement en trois étapes des cossettes. Le débit et le pH du jus dans ces circuits sont réglés comme décrits ci-dessus. Le niveau du jus dans le bac 34 est maintenu entre une limite supérieure et une limite inférieure par un trop-plein, qui permet d'évacuer un excédent de jus vers le bac 36, et par un régulateur de niveau agissant sur une vanne 54 placée sur une tuyauterie 56 reliant les tuyauteries d'alimentation des rampes 20 et 22. Le niveau du jus dans le bac 36 est maintenu entre des limites supérieure et inférieure au moyen d'un régulateur de niveau agissant sur une vanne 58 placée sur une tuyauterie d'alimentation en jus de 1ère ou 2ème carbonatation 15 (jus partiellement ou totalement épuré).

Un échangeur thermique 60 placé sur le circuit alimentant la rampe 22 permet de maintenir le jus alimentant cette rampe à une température d'environ 15°C. Les liaisons entre circuits établies au moyen des tuayuteries 52 et 56 permettent de maintenir la température du jus alimentant les rampes 18 et 20 voisines de 15°C. Si nécessaire, des échangeurs thermiques pourraient être placés sur ces circuits.

L'addition de chaux dans les bacs 32, 34 et 36 est dosée de sorte que le pH des jus circulant dans les trois circuits croisse de l'amont vers l'aval de façon à assurer une calcification progressive des cossettes. Compte tenu de la température relativement basse des jus, il se forme dans les bacs du saccharate de calcium dont les ions calcium se fixent ensuite sur les cossettes ce qui a pour effet d'améliorer la pressabilité des pulpes et de réduire la teneur en matières pectiques du jus de diffusion. Les ions calcium pourront être apportés sous forme de chaux vive ou de lait de chaux.

La circulation en circuit fermé évite les pertes de chaux et permet d'en réduire notablement la consommation.

L'installation représentée schématiquement sur la figure 2 est du même type que celle de la figure 1. Elle en diffère essentiellement par le fait qu'elle ne comporte pas de bac de mélange sur chaque circuit et que toute la chaux nécessaire au traitement des cossettes est ajoutée au jus dans un mélangeur 62 placé sur le circuit aval, au moyen du distributeur-doseur 48. Le pH dans les deux autres circuits est maintenu à la valeur voulue par addition d'un débit réglé de jus saccharaté prélevé sur le circuit aval (ligne 64 et vannes 65). Le jus de lavage des cossettes recueilli dans le collecteur 24 est envoyé à l'atelier d'épuration. Le jus recueilli dans les collecteurs 26, 28 et 30 est soutiré par des pompes 38, 40 et 42 qui alimentent les rampes 18, 20 et 22, respectivement. Des débits de purge peuvent être prélevés sur chacun des circuits au moyen de pompes 150, 152 et 154 pour maintenir la pureté du jus circulant dans ce circuit à la valeur voulue. Du jus de 1ère ou 2ème carbonatation est introduit en 68 dans le circuit aval, en amont de l'échangeur 60, pour compenser le volume de jus retenu par la couche de cossettes et les débits de purge; ce jus est réparti entre les trois circuits de façon à maintenir constant le volume de jus en circulation dans chacun d'eux (ligne 66 et vannes 67).

Les débits des pompes 150, 152 et 154 sont réglés de façon à maintenir à la valeur voulue la pureté des jus dans les trois circuits, les jus prélevés par ces pompes sont envoyés à l'atelier d'épuration. On pourrait ne prévoir une purge que sur l'un des circuits, par exemple le circuit d'alimentation de la rampe 22.

L'échangeur de chaleur 60 permet de maintenir le jus alimentant la rampe 22 à une température d'environ 15°C. Les liaisons entre circuits établies au moyen des tuyauteries 64 et 66 permettent de maintenir la température du jus alimentant les rampes 18 et 20 voisines de 15°C. Si nécessaire, des échangeurs de chaleur pourraient être placés sur ces circuits.

Des appareils autres que le transporteur à tapis décrit ci-dessus peuvent être utilisés pour mettre les cossettes en contact avec un ou plusieurs courants de jus s'écoulant en circuit fermé.

L'appoint de jus nécessaire pour compenser le volume de jus retenu par les cossettes et éventuellement les débits de purge peut être remplacé par de l'eau qui sera ajoutée, par exemple, dans le circuit amont et se chargera, par passage à travers la couche de cossettes, d'une quantité de sucre suffisante pour permettre la formation de saccharates.

Bien que les deux installations décrites comportent trois circuits, il est bien évident que ce nombre n'est pas limitatif.

## Revendications

1. Procédé d'extraction par diffusion du sucre des cossettes de betteraves comportant un traitement préliminaire des cossettes au moyen d'un jus additionné de chaux, caractérisé en ce qu'on fait circuler en circuit fermé le jus additionné de chaux, qu'on introduit dans ce circuit un débit d'eau ou de jus sucré totalement ou partiellement épuré correspondant au débit de jus retenu par les cossettes et un débit de chaux correspondant aux ions calcium fixés sur les cossettes, et qu'on maintient la température du jus dans ledit circuit à une valeur convenable pour le traitement des cossettes.

2. Procédé selon la revendication 1, caractérisé en ce que le traitement préliminaire des cossettes se fait en plusieurs étapes et en ce que, à chaque étape, les cossettes sont traitées au moyen d'un jus circulant en circuit fermé avec addition des quantités nécessaires de jus ou d'eau et de chaux.

3. Procédé selon la revendication 2, caractérisé en ce que la teneur en ions calcium du jus de traitement augmente de la première à la dernière étape.

4. Procédé selon la revendication 2 ou 3, caractérisé en ce que le jus épuré ou l'eau et la chaux sont ajoutés exclusivement dans l'une des étapes du traitement, et en ce que le volume et la teneur en ions calcium du jus circulant en circuit fermé dans les autres étapes est ajusté par addition de jus prélevé sur le circuit de ladite étape où se font les ajouts.

5. Procédé selon l'une quelconque des revendications 1 à 4, caractérisé en ce qu'on prélève sur l'un les circuits du jus additionné de chaux ou sur chaque circuit un débit de jus constituant une purge permettant de maintenir la pureté du jus circulant dans le circuit à la valeur voulue, et en ce que le débit d'eau ou de jus totalement ou partiellement épuré introduit dans ledit circuit correspond au débit de jus retenu par les cossettes augmenté dudit débit de purge.

6. Procédé selon l'une quelconque des revendications 1 à 5, caractérisé en ce que, avant de soumettre les cossettes audit traitement préliminaire, on les lave au moyen d'un jus préalablement refroidi.

7. Installation pour la mise en oeuvre du procédé selon l'une quelconque des revendications 1 à 6, comportant un transporteur à tapis sans fin perméable (10) apte à recevoir une couche régulière de cossettes et équipée de rampes d'arrosage (18, 20, 22) placées au-dessus du tapis et de collecteurs (26, 28, 30) placés au-dessous caractérisée en ce que les rampes d'arrosage et les collecteurs sont reliés entre eux de façon à former plusieurs circuits fermés échelonnés le long du transporteur, chacun de ces circuits étant équipé de moyens de réglage du débit (38 40), 42) et de la teneur en chaux du jus (44, 46, 48), et au moins l'un des circuits comportant un échangeur thermique (60) permettant de maintenir la température du jus à la valeur voulue.

8. Installation pour la mise en oeuvre du procédé selon l'une quelconque des revendications 1 à 6, comportant un malaxeur horizontal équipé de moyens de transport assurant le déplacement des cossettes d'une extrémité à l'autre du malaxeur et muni de plusieurs entrées et sorties du jus caractérisée en ce que les entrées et sorties sont reliées entre elles de façon à former plusieurs circuits fermés échelonnés le long du malaxeur, chacun de ces circuits étant équipé de moyens de réglage du débit et de la teneur en chaux du jus et au moins l'un des circuits comportant un échangeur thermique permettant de maintenir la température du jus à la valeur voulue.

9. Installation selon l'une des revendications 7 ou 8, caractérisée en ce que chaque circuit est équipé d'un distributeur-doseur de chaux (44, 46, 48).

10. Installation selon l'une des revendications 7 ou 8, caractérisée en ce que lesdits moyens de réglage de la teneur en chaux des jus comprennent un dispositif de dosage (48) équipant le circuit situé le plus en aval et des tuyauteries (64) reliant ce circuit aux autres circuits et munies de vannes de réglage de débit (65).

11. Installation selon l'une quelconque des revendications 7 à 10, caractérisée en ce qu'elle comporte des tuyauteries (52, 56, 66) reliant lesdits circuits entre eux et des vannes (50, 54, 67) placées sur lesdites tuyauteries et permettant de régler les volumes de jus circulant dans les circuits.

12. Installation selon l'une quelconque des revendications 7 à 11, caractérisée en ce qu'elle comporte des moyens (150, 152, 154) pour prélever un débit de purge sur au moins un desdits circuits.

## Claims

1. Process for the extraction of sugar from beet cossettes by diffusion including a preliminary processing of the cossettes by means of juice with lime added, characterized in that the juice with lime added is circulated in a closed circuit, an amount of water or of totally or partially purified juice corresponding to the flow of juice retained by the cossettes and a flow of lime corresponding to the calcium ions fixed on the cossettes are introduced into the said circuit, and the temperature of the juice in the said circuit is maintained at a value suitable for the processing of the cossettes.

2. Process according to claim 1, characterized in that the preliminary processing of the cossettes is carried out in several stages and in that, at each stage, the cossettes are processed by means of juice circulating in a closed circuit with the addition of the necessary amounts of juice or water and of lime.

3. Process according to claim 2, characterized in that the content of calcium ions in the processing juice grows from the first to the last stage.

4. Process according to claim 2 or 3, characterized in that the purified juice or the water and the lime are added in one only of the processing stages, and in that the volume and the content of calcium ions in the juice which circulates in a closed circuit in the remaining stages is adjusted by the addition of juice taken from the circuit of the said stage in which the additions take place.

5. Process according to anyone of claims 1 to 4, characterized in that juice with lime added is taken from one of the circuits or a flow of juice is let out from each circuit, which constitutes a volume of purge, to maintain the required purity of the juice flowing through the circuit, and in that the flow of water or of totally or partially purified juice introduced in the said circuit corresponds to the flow of juice retained by the cossettes plus the said purge flow.

6. Process according to anyone of claims 1 to 5, characterized in that the cossettes are washed by means of previously cooled juice before being subjected to the said preliminary processing.

7. Plant for implementing the process according to anyone of claims 1 to 6, including a permeable endless-belt conveyor (10) capable of receiving a regular layer of cossettes and equipped with spraying pipes (18, 20, 22) placed above the belt and collectors (26, 28, 30) placed under the same, characterized in that the spraying pipes and the collectors are connected with each other so as to form several closed circuits spaced out along the conveyor, each of these circuits being fitted with means to regulate the flow (38, 40, 42) and the lime content in the juice (44, 46, 48), and at least one of the circuits includes a heat exchanger (60) permitting to maintain the required juice temperature.

8. Plant for implementing the process according to anyone of claims 1 to 6, including a horizontal mixer equipped with conveying means which move the cossettes from one end of the mixer to the other one, and provided with several juice inlets and outlets, characterized in that the inlets and outlets are connected with each other so as to form several closed circuits spaced out along the mixer, each of these circuits being equipped with means to regulate the flow of juice and its lime content and at least one of the circuits being fitted with a heat exchanger permitting to maintain the required juice temperature.

9. Plant according to anyone of claims 7 or 8, characterized in that each circuit is equipped with a lime distributor-proportioner (44, 46, 48).

10. Plant according to anyone of claims 7 or 8, characterized in that the said means for regulating the content of lime in the juice include a proportioning device (48) mounted on the foremost circuit and pipes (64) which connect this circuit with the other circuits and which are provided with flow regulating valves (65).

11. Plant according to anyone of claims 7 to 10, characterized in that it includes pipes (52, 56, 66) connecting the said circuits with each other and valves (50, 54, 67) mounted on the said pipes and permitting to regulate the volumes of juice flowing in the circuits.

12. Plant according to anyone of claims 7 to 11, characterized in that it includes means (150, 152, 154) for taking a purge flow from at least one of the said circuits.

## Patentansprüche

1. Verfahren zur Zuckerextraktion durch Diffusion aus Rübenschnitzeln, welches eine Schnitzelvorbehandlung mit gekalktem Saft umfaßt, dadurch gekennzeichnet, daß der gekalkte Saft im geschlossenen Kreislauf zirkuliert wird, daß in diesen Kreislauf eine Menge Wasser bzw. ganz oder teilweise gereinigter zuckerhaltiger Saft eingeleitet wird, welche der von den Schnitzeln zurückgehaltenen Menge entspricht, sowie eine Menge Kalk, die den von den Schnitzeln aufgenommenen Kalziumionen entspricht, und daß die Safttemperatur in diesem Kreislauf auf einem für die Schnitzelbehandlung angemessenen Wert gehalten wird.

2. Verfahren gemäß Anspruch 1, dadurch gekennzeichnet, daß die Schnitzelvorbehandlung in mehreren Stufen erfolgt und daß die Schnitzel in jeder Stufe durch einen im geschlossenen Kreislauf umlaufenden Saft unter Zugabe der erforderlichen Mengen Saft bzw. Wasser sowie Kalk behandelt werden.

3. Verfahren gemäß Anspruch 2, dadurch gekennzeichnet daß der Gehalt an Kalziumionen des Behandlungssaftes von der ersten zur letzten Stufe hin zunimmt.

4. Verfahren gemäß Anspruch 2 oder 3, dadurch gekennzeichnet, daß der gereinigte Saft bzw. das Wasser sowie der Kalk ausschließlich in einer der Behandlungsstufen zugesetzt werden, und daß die Menge und der Gehalt an Kalziumionen des in den anderen Stufen im geschlossenen Kreislauf umlaufenden Saftes durch Zugabe von aus besagtem Kreislauf, in dem die Zugaben erfolgen, entnommenem Saft angeglichen werden.

5. Verfahren gemäß irgendeinem der Ansprüche 1 - 4, dadurch gekennzeichnet, daß aus einem der Kreisläufe gekalkter Saft oder aus jedem Kreislauf ein Volumen Saft entnommen wird, das einen Ablaß bildet, welcher es erlaubt, die Reinheit des im Kreislauf umlaufenden Saftes auf dem gewünschten Wert zu halten, und daß die in besagten Kreislauf eingeleitete Menge Wasser bzw. ganz oder teilweise gereinigter Saft der Saftmenge, die von den Schnitzeln zurückgehalten wurde, plus der abgelassenen Menge entspricht.

6. Verfahren gemäß irgendeinem der Ansprüche 1 - 5, dadurch gekennzeichnet, daß die Schnitzel vor der besagten Vorbehandlung mit vorab abgekühltem Saft abgesüßt werden.

7. Anlage zur Durchführung des Verfahrens gemäß irgendeinem der Ansprüche 1 - 6, versehen mit einem durchlässigen Stetigbandförderer (10), geeignet zur Aufnahme einer gleichmäßigen Schnitzelschicht und ausgerüstet mit über dem Band angeordneten Berieselungsrohren (18, 20, 22) und unterhalb angeordneten Sammlern (26, 28, 30), dadurch gekennzeichnet, daß die Berieselungsrohre und die Sammler derartig untereinander verbunden sind, daß sie mehrere dem Förderer entlang verteilte geschlossene Kreisläufe bilden, wobei jeder dieser Kreisläufe mit Mitteln zur Regelung von Saftdurchsatz (38, 40, 42) und -kalkgehalt (44, 46, 48) und mindestens einer der Kreisläufe mit einem Wärmeaustauscher (60) zur Aufrechterhaltung der gewünschten Safttemperatur ausgerüstet ist.

8. Anlage zur Durchführung des Verfahrens gemäß irgendeinem der Ansprüche 1 - 6, ausgerüstet mit einer horizontalen Maische, welche mit Transportmitteln zur Schnitzelbeförderung von einem Ende zum anderen der Maische sowie mit mehreren Safteinlässen und -auslässen versehen ist, dadurch gekennzeichnet, daß die Ein- und Auslässe derartig untereinander verbunden sind, daß sie mehrere der Maische entlang verteilte geschlossene Kreisläufe bilden, wobei jeder dieser Kreislaufe mit Mitteln zur Regelung von Saftdurchsatz und -kalkgehalt und mindestens einer der Kreisläufe mit einem Wärmeaustauscher zur Aufrechterhaltung der gewünschten Safttemperatur ausgerüstet ist.

9. Anlage gemäß einem der Ansprüche 7 bzw. 8, dadurch gekennzeichnet, daß jeder Kreislauf mit einem Kalkdosierverteiler (44, 46, 48) ausgerüstet ist.

10. Anlage gemäß einem der Ansprüche 7 bzw. 8, dadurch gekennzeichnet, daß besagte Saftkalkgehaltsregelmittel eine im auslaufseitigen Kreislauf angeordnete Dosiervorrichtung (48) umfassen sowie Rohrleitungen (64), welche diesen Kreislauf mit den anderen Kreisläufen verbinden und welche mit Durchsatzregelventilen (65) ausgerüstet sind.

11. Anlage gemäß irgendeinem der Ansprüche 7 - 10, dadurch gekennzeichnet, daß sie mit Rohrleitungen (52, 56, 66) versehen ist, die besagte Kreisläufe untereinander verbinden und mit auf besagten Rohrleitungen angeordneten Ventilen (50, 54, 67), die die Regelung des in diesen Kreisläufen umlaufenden Saftvolumens erlauben.

12. Anlage gemäß irgendeinem der Ansprüche 7 - 11, dadurch gekennzeichnet, daß sie mit Mitteln (150, 152, 154) zur Entnahme eines Ablaßvolumens aus mindestens einem der Kreisläufe ausgerüstet ist.
